# EUROPEAN PATENT APPLICATION

(11) **EP 2 381 344 A2**
(43) Date of publication of application: **26.10.2011**
(21) Application number: 10733623.2
(22) Date of filing: 18.01.2010
(51) Int. Cl.: G06F 3/041, G06F 3/00, G06F 1/16

(54) **INPUT APPARATUS**

(30) Priority: 21.01.2009 KR 20090005141
(71) Applicant: LG Innotek Co., Ltd., Seoul 100-714 (KR)
(72) Inventor: KIM, Do Young, Anyang-si Gyeonggi-do 430-852 (KR)
(74) Representative: Steimle, Josef
(86) International application number: PCT/KR2010/000302
(87) International publication number: WO 2010/085070

(57) **Abstract**

The present invention relates to an input device, the device including a substrate including a first region and a second region adjacent to the first region; a plurality of first sensing electrodes arranged on the first region, each electrode electrically connected to the other electrode; a plurality of second sensing electrodes arranged on the second region, each electrode electrically connected to the other electrode; a plurality of third sensing electrodes alternatively arranged with the first sensing electrodes and alternatively arranged with the second sensing electrodes, and each electrode electrically connected to the other electrode, wherein the first, second and third sensing electrodes are arranged in a row.

## Description

### [Technical Field]

The teachings in accordance with the exemplary embodiments of this invention relate generally to an input device.

### [Background Art]

Concomitant with development and popularization of graphic user interface (GUI), use of an easy-input touch screen now becomes popularized. A touch screen or touch panel is a display which can detect a location of a touch within a display area, usually performed either with a human hand or a stylus. This allows the display to be used as an input device, removing a keyboard and/or a mouse as a primary input device for interacting with a display's content.

Technically speaking, the commonly used touch screens employ resistive, capacitive, ultrasonic wave, electromagnetic, vector force and optical (Infrared) touch modes. Among these types of touch screens, resistive type is the most common one, which has approximately 60% of market share (the second is capacitive type with around 24% of market share). Each of these types of touch screens has its own features, advantages and disadvantages. Now, these touch screens are briefly explained.

The resistive is a common type of touch screen technology. It is a low-cost solution found in many touch screen applications, including hand-held computers, PDA's, consumer electronics, and point-of-sale-applications. The resistive touch screens are such that a pair of resistive layers facing with each other is provided on a touch screen element. The pressed position is detected by contact between the resistive layers so that one of the resistive layers is formed on a flexible film for deformation during pressing. As mentioned above, the resistive film type is widely used, but disadvantageous due to degraded mechanical and environmental reliability. At the same time, although the resistive touch screen today are widely used on consuming electronic products, it is unable to identify multiple contact points simultaneously on its display area.

The ultrasonic wave touch screen first converts an electric signal into an ultrasonic wave through a transducer, and then directly transmits the ultrasonic wave through a surface of the touch panel. When the touch panel is used, the ultrasonic wave may be absorbed by contacting a pointer to cause attenuation, and an accurate position of the contact is obtained through comparison and calculation between attenuation amounts before and after use. The surface acoustic wave touch screen is disadvantageous due to generation of noise and/or susceptibility to noise.

The electromagnetic type touch screen is such that, in the field of magnetism, a magnetic field is normally generated by a coil due to electromagnetism and said magnetic field induces a voltage in another coil, also called receiver coil, under the premise that the magnetic field strength changes in the receiver coil. It is clear that a non-moving receiver coil is not capable to measure a non-altering magnetic field since no voltage is induced by said magnetic field. There are already means, which can measure a position and/or orientation of a receiver means in relation to a specific magnetic field generating means. To measure the orientation in a 3-dimensional space normally three orthogonal arranged probes are used to calculate the coordinates. These arrangements are most of the time very bulky, space taking and needs a special stylus.

The capacitance type touch screen adopts capacity changes generated from the combination of static electricity between arranged transparent electrodes and a human body, so as to detect coordinates of the contact position through a generated induced current. That is, the capacitance type touch screen includes one substrate having an electrode formed thereon. In the capacitance type touch panel, when, for example, a finger contacts and approaches the touch panel, a variation in capacitance between the electrode and the finger is detected, thereby detecting input coordinates. Since the capacitance type touch panel is a non-contact type, it has high durability, excellent environmental and mechanical reliability due to changeable upper barrier layer unlike the resistive film type touch panel. However, the capacitance type touch panel has disadvantages in that it is difficult to input information with fingers or a pen. The capacitance type touch screen may be divided to two types, that is, an analogue type and a digital type.

The optical type touch screens principally use no films for touch recognition such that transmittance is 100%. Furthermore, no reflexibility, degradation of brightness and blurring of displays are generated from these optical touch screens. Maintenance of transmittance and brightness in displays is an important factor for image clarity, such that an optical type is adequate for implementation of high quality screens. Furthermore, the optical type touch screens utilize the principle of light source reception and blocking, such that no load is applied to a sensor as detection is not performed by physical or electrical contacts, which increases reliability for use in factory monitoring, various automation equipment and Automatic Telling Machines. The optical type touch screens are advantageously in that these screens are free from such materials as films or ITO (Indium Tin Oxide) protective films to thereby have less susceptibility to scratches or external shocks and a lower error probability including erroneous operation.

### [Disclosure]

### [Technical problem]

The present invention is directed to provide an input device having a single electrode layer that is capable of accurately sensing an inputted position, reducing the number of lead electrodes transmitting an inputted signal and performing a multiple touch.

Technical problems to be solved by the present invention are not restricted to the above-mentioned, and any other technical problems not mentioned so far will be clearly appreciated from the following description by skilled in the art.

### [Technical Solution]

An object of the invention is to solve at least one or more of the above problems and/or disadvantages of an input device in whole or in part and to provide at least the advantages described hereinafter. In order to achieve at least the above objects, in whole or in part, and in accordance with the purposes of the invention, as embodied and broadly described, and in one general aspect of the present invention, there is provided an input device, the device characterized by: a substrate including a first region and a second region adjacent to the first region; a plurality of first sensing electrodes arranged on the first region, each electrode electrically connected to the other electrode; a plurality of second sensing electrodes arranged on the second region, each electrode electrically connected to the other electrode; a plurality of third sensing electrodes alternatively arranged with the first sensing electrodes and alternatively arranged with the second sensing electrodes, and each electrode electrically connected to the other electrode, wherein the first, second and third sensing electrodes are arranged in a row.

Preferably, the substrate includes a third region adjacent to the second region, a plurality of fourth sensing electrodes arranged on the third region and electrically connected to the second sensing electrodes; a plurality of fifth sensing electrodes arrange on the third region, and alternatively arranged with the fourth sensing electrodes, each electrode electrically connected to the other electrode, wherein the first, second, third, fourth and fifth sensing electrodes are arranged in a row.

Preferably, the first, second and third sensing electrodes are arranged in a row to a first direction, each of the first sensing electrodes has a different area based on position and the first sensing electrode is gradually increased or decreased in area as advancing to the first direction.

Preferably, each of the third sensing electrodes has a different area based on position, and is gradually increased or decreased in area as advancing to the first direction.

Preferably, the input device is further characterized by a first main electrode extended to a first direction and connected to the first sensing electrode; a second main electrode extended to the first direction and connected to the second sensing electrodes; and a third main electrode extended to the first direction and connected to the third sensing electrodes.

Preferably, the first and second main electrodes are arranged in a row to the first direction.

Preferably, the first, second and third sensing electrodes are arranged on the same layer.

In another general aspect of the present invention, there is provided an input device, the device characterized by: a substrate including a first region and a second region adjacent to the first region; a first transparent electrode arranged on the first region and including a first main electrode extended to a first direction and a plurality of first diverging electrodes extended from the first main electrode; a second transparent electrode arranged across the first and second regions and including a second main electrode extended to the first direction and a plurality of second diverging electrodes extended from the second main electrode; and a third transparent electrode arranged on the second region and including a third main electrode extended to the first direction and a plurality of third diverging electrodes extended from the third main electrode.

Preferably, each of the first diverging electrodes has a different area based on position, and is gradually increased or decreased in area on the substrate as advancing to the first direction.

Preferably, each of the third diverging electrodes has a different area based on position, and is gradually increased or decreased in area on the substrate as advancing to the first direction.

Preferably, the first, second and third diverging electrodes are arranged in a row, a part of the first and second diverging electrodes is alternatively arranged, and the other part of the third and second diverging electrodes is alternatively arranged.

Preferably, the input device further includes a ground electrode arranged adjacent to at least one of the first, second and third transparent electrodes.

Preferably, the substrate includes a third region adjacent to the second region and a fourth transparent electrode arranged on the third region.

### [Advantageous Effects]

The input device according to the exemplary embodiments of the present invention receives a signal in response to a multiple touch. That is, a signal inputted to a first region is sensed by first and third sensing electrodes, and a signal inputted to a second region is sensed by second and third sensing electrodes. Furthermore, a signal inputted to the first region is sensed by first and second transparent electrodes, and a signal inputted to the second region is sensed by second and third transparent electrodes. Therefore, the input device according to the exemplary embodiment of the present invention can advantageously sense signals inputted to the first and second regions at the same time, and can advantageously receive signals in response to a multiple touch

Furthermore, first, second and third sensing electrodes can be arranged on the same planar surface to receive a signal in response to a touch. Alternatively, the first, second and third transparent electrodes can be also arranged on the same planar surface. Therefore, the input device according to the exemplary embodiment of the present invention can arrange electrodes for sensing a signal from outside on a single layer, and thereby can reduce an error caused by a height difference among electrodes for sensing the signal from outside.

Still furthermore, the first, second and third sensing electrodes can be arranged in a row to a first direction, and can gradually have an area increasing or decreasing as advancing to the first direction, whereby a position on which a signal in response to a touch is inputted can be advantageously and accurately sensed based on a ratio of signals inputted from the first, second and third sensing electrodes.

All the signals inputted to the first and second regions from the third sensing electrodes can be sensed, and a lead electrode can be connected to the third sensing electrodes to allow a signal to be transmitted. That is, in order to sense the signals inputted to the first and second regions, a total of three lead electrodes can used, each on the first sensing electrodes, the second sensing electrodes and the third sensing electrodes. Thus, the input device according to the exemplary embodiment of the present invention can advantageously transmit the inputted signal by using a reduced number of lead electrodes.

### [Description of Drawings]

The teachings of the present invention can be readily understood by considering the following detailed description in conjunction with the accompanying drawings, in which:
FIG. 1 is a plan view illustrating an electrode structure of a capacitance type touch panel according to an exemplary embodiment of the present invention;
FIG. 2 is a plan view illustrating a first row of a capacitance type touch panel according to an exemplary embodiment of the present invention;
FIG. 3 is a cross-sectional view along line A-A' of FIG.1;
FIG. 4 is a schematic view illustrating a process in which a signal is inputted to a capacitance type touch panel according to an exemplary embodiment of the present invention;
FIG. 5 is a schematic view illustrating a signal inputted in FIG.4;
FIG. 6 is a schematic view illustrating a process in which a signal is inputted to a capacitance type touch panel according to an exemplary embodiment of the present invention;
FIGS. 7 and 8 are a process in which a signal inputted in FIG.6 is scanned; and
FIG. 9 is a plan view illustrating an electrode structure of a capacitance type touch panel according to an exemplary embodiment of the present invention.

### [Best Mode]

The following description is not intended to limit the invention to the form disclosed herein. Consequently, variations and modifications commensurate with the following teachings, and skill and knowledge of the relevant art are within the scope of the present invention. The embodiments described herein are further intended to explain modes known of practicing the invention and to enable others skilled in the art to utilize the invention in such, or other embodiments and with various modifications required by the particular application(s) or use(s) of the present invention.

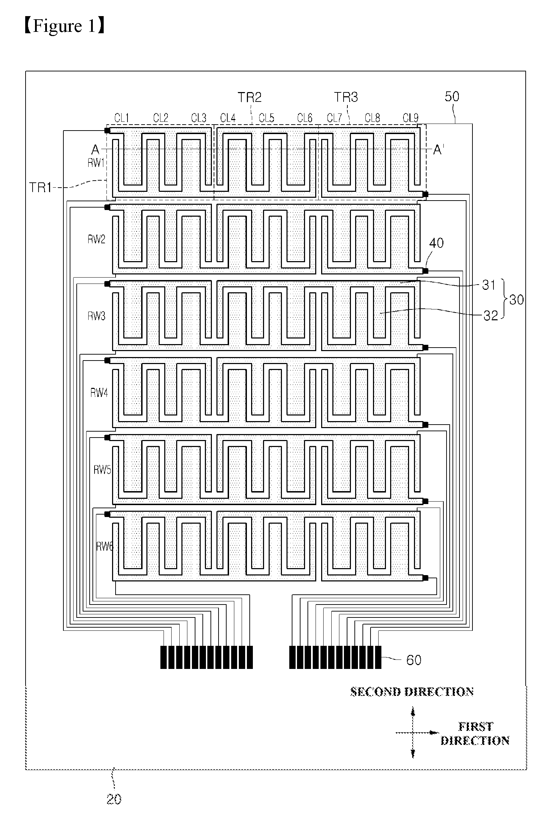

The disclosed embodiments and advantages thereof are best understood by referring to FIGS. 1-9 of the drawings, like numerals being used for like and corresponding parts of the various drawings. Other features and advantages of the disclosed embodiments will be or will become apparent to one of ordinary skill in the art upon examination of the following figures and detailed description. It is intended that all such additional features and advantages be included within the scope of the disclosed embodiments, and protected by the accompanying drawings. Further, the illustrated figures are only exemplary and not intended to assert or imply any limitation with regard to the environment, architecture, or process in which different embodiments may be implemented. Accordingly, the described aspect is intended to embrace all such alterations, modifications, and variations that fall within the scope and novel idea of the present invention.

It will be understood that the terms "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. That is, the terms "including", "includes", "having", "has", "with", or variants thereof are used in the detailed description and/or the claims to denote non-exhaustive inclusion in a manner similar to the term "comprising".

Furthermore, "exemplary" is merely meant to mean an example, rather than the best. It is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated. That is, in the drawings, the size and relative sizes of layers, regions and/or other elements may be exaggerated or reduced for clarity. Like numbers refer to like elements throughout and explanations that duplicate one another will be omitted. Now, the present invention will be described in detail with reference to the accompanying drawings.

Words such as "thereafter," "then," "next," etc.," are not intended to limit the order of the processes. These words are simply used to guide the reader through the description of the methods. It will be understood that when an element such as a layer or region is referred to as being "on" or "under" another element, it can be directly on or extend directly onto the other element or intervening elements may also be present.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera.

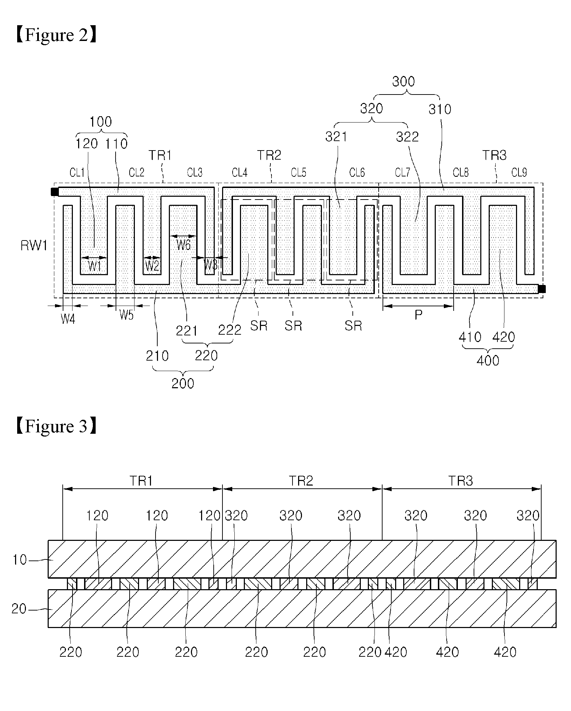

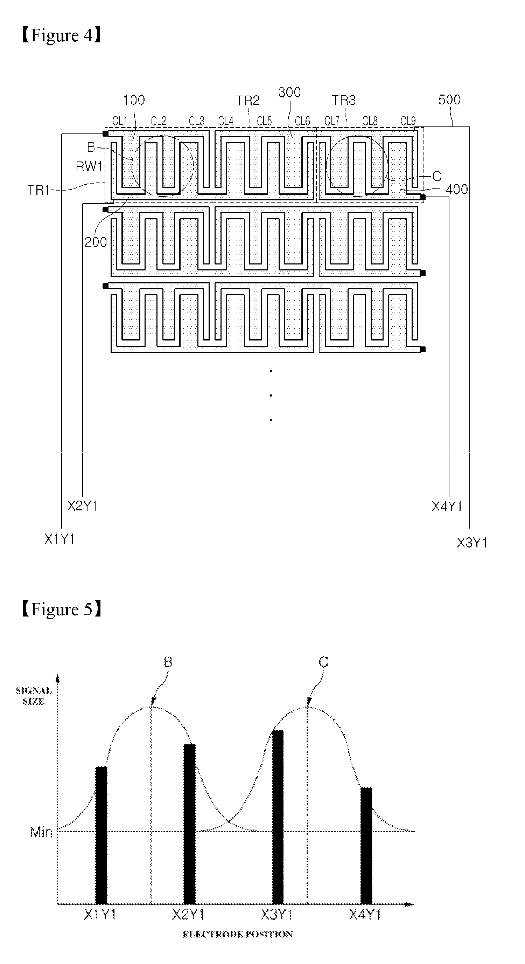

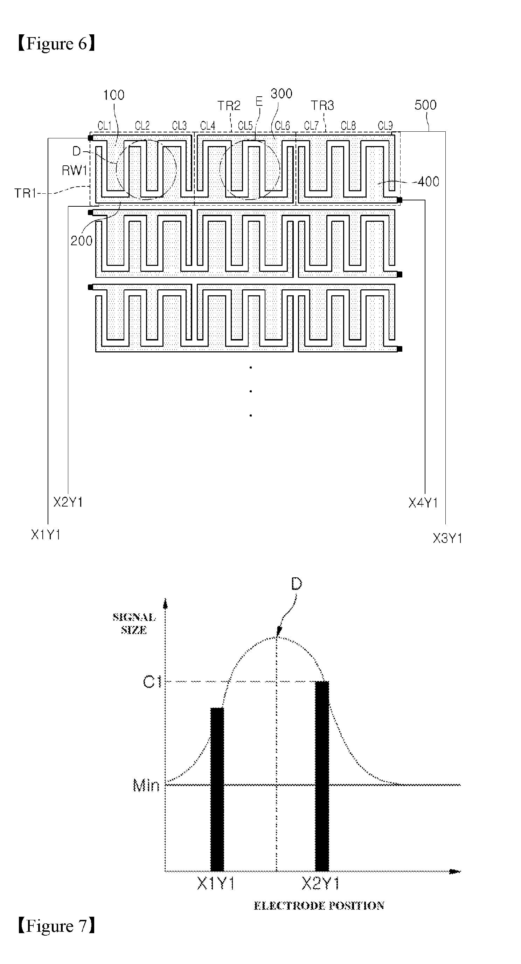

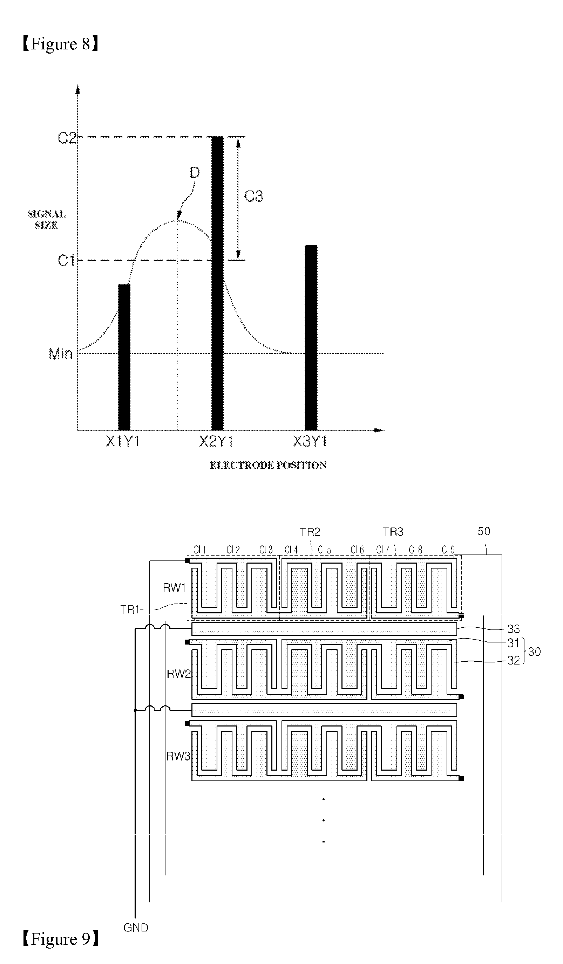

FIG. 1 is a plan view illustrating an electrode structure of a capacitance type touch panel according to an exemplary embodiment of the present invention, FIG.2 is a plan view illustrating a first row of a capacitance type touch panel according to an exemplary embodiment of the present invention, FIG. 3 is a cross-sectional view along line A-A' of FIG.1, FIG. 4 is a schematic view illustrating a process in which a signal is inputted to a capacitance type touch panel according to an exemplary embodiment of the present invention, FIG.5 is a schematic view illustrating a signal inputted in FIG.4, FIG.6 is a schematic view illustrating a process in which a signal is inputted to a capacitance type touch panel according to an exemplary embodiment of the present invention, and FIGS.7 and 8 are a process in which a signal inputted in FIG.6 is scanned.

Referring to FIGS. 1 to 8, a capacitance type touch panel according to an exemplary embodiment of the present invention includes an upper substrate (10), a bottom substrate (20), a plurality of transparent electrodes (30), a plurality of lead electrodes (50) and a plurality of pad electrodes (60).

Referring to FIG.3, the upper substrate (10) is arranged opposite to the bottom substrate (20). The upper and bottom substrates (10, 20) are transparent, and are formed with insulation materials. Examples of insulation materials include glass or transparent plastic. To be more specific, examples of insulation materials include polymethylmethacrylate and polyethyleneterephthalate, PET).

The upper substrate (10) may be flexible, while the bottom substrate (20) may be rigid. Alternatively, all the upper and bottom substrates (10, 20) may be rigid. The upper substrate (10) may be attached to the bottom substrate (20) through an adhesive layer. That is, an adhesive layer may be interposed between the upper and bottom substrates (10, 20).

Referring to FIG.1, the bottom substrate (20) may be divided to a plurality of rows (RW 1, RW2, ......, RWn). The rows (RW1, RW2, ......, RWn) takes a shape extended to a first direction. The rows (RW1, RW2, ......, RWn) are also defined as being arranged in side by side. Each of the rows (RW1, RW2, ......, RWn) is divided to a plurality of touch regions (TR1, TR2, .... TRn). The touch regions (TR1, TR2, .... TRn) are arranged in a row to the first direction.

The transparent electrodes (30) are arranged on the bottom substrate (20). The transparent electrodes (30) are arrange on the rows (RW1, RW2, ......, RWn). For example, the transparent electrodes (30) may be formed on each row (RW1, RW2, ......, RWn) in a repeated pattern. That is, each row (RW1, RW2, ......, RWn) may be arranged with a same number of transparent electrodes and a same shape of transparent electrodes. A part of the transparent electrodes is arranged on a single touch region, and the other part of the transparent electrodes is arranged on two touch regions.

Each transparent electrode (30) includes a main electrode (31) extended to the first direction, and diverging electrodes (32) extended from the main electrode (31) to a second direction. For example, the second direction may be perpendicular to the first direction. That is, the first direction may be an x axis, and the second direction may be a y axis.

At this time, the diverging electrodes (32) are arranged in a row to the first direction, and each of the diverging electrodes has a mutually different area based on position of the first direction. To be more specific, each of the diverging electrodes has a mutually different area based on position of the first direction as advancing to the first direction. A diverging electrode having a larger area may be arranged, and a diverging electrode having a smaller area may be arranged

Each of diverging electrodes (400), when viewed in a top plan view, may take the shape of a rectangle. Furthermore, each of the diverging electrodes (400) has a different width based on position of the first direction. To be more specific, each of the diverging electrodes (400) may gradually have a wider or narrower width as advancing to the first direction.

The diverging electrodes (32) may be sensing electrodes sensing a signal inputted from the outside in response to a touch. The diverging electrodes (32) are connection members electrically connecting the sensing electrodes.

The main electrode (31) and the diverging electrodes (32) may be integrally formed, transparent and conductive materials. The transparent electrodes (30) may be formed on the bottom substrate (20) by way of deposition of transparent conductive materials and patterning process. Exemplary materials for transparent electrodes (30) may include ITO (Indium Tin Oxide) or IZO (Indium Zinc Oxide).

Referring to FIG. 2, the transparent electrodes (30) of the first row (RW1) will be described in detail.

The first row (RW1) is divided into a first touch region (TR1), a second touch region (TR2) and a third touch region (TR3). The second touch (TR2) is defined as being adjacent to the first touch region (TR1), and the third touch region (TR3) is arranged adjacent to the second touch region (TR2). The first, second and third touch regions (TR1, TR2, TR3) are defined as being arranged in a row to the first direction. Furthermore, the first row (RW1) is arranged with the first, second, third and fourth transparent electrodes (100, 200, 300, 400).

The first transparent electrode (100) is arranged only on the first touch region (TR1), and includes a first main electrode (110) and first diverging electrodes (120). The first main electrode (110) is extended to the first direction.

The first diverging electrodes (120) are extended to the second direction from the first main electrode (110), and each of the first diverging electrodes (120) is electrically connected to the other first diverging electrode by the first main electrode (110).

The first diverging electrodes (120) are arranged in a row to the first direction. At this time, each of the first diverging electrodes (120) may have a mutually different area based on position. To be more specific, the first diverging electrodes (120) may have a gradually smaller area as advancing to the first direction. That is, the first diverging electrodes, each of a gradually smaller area, is arranged as advancing to the first direction.

In other words, the first diverging electrode has the largest area and the widest width (W1), the first diverging electrode has the second largest area and the second widest width (W2), and the third diverging electrode has the smallest area and the narrowest width (W3).

The second transparent electrode (200) is arranged across the first and second touch regions (TR1, TR2), and includes second main electrode (210) and second diverging electrodes (220). The second main electrode (210) is extended to the first direction, and is arranged across the first and second touch regions (TR1, TR2). The second main electrode (210) is arranged side by side with the first main electrode (110).

The second diverging electrodes (220) are extended to the second direction from the second main electrode (210). Each of the second diverging electrodes (220) is mutually electrically connected by the second main electrode (210). The second diverging electrodes (220) may be divided to second diverging electrodes arranged on the first touch region (TR1) and second diverging electrodes (222) arranged on the second touch region (TR2).

Each of the second diverging electrodes arranged on the first touch region (TR1) is arranged among the first diverging electrodes (120). For example, the first diverging electrodes (120) and the second diverging electrodes (221) arranged on the first touch region (TR1) may be alternatively arranged. The second diverging electrodes (220) may have mutually different areas and width based on position.

For example, each of the second diverging electrodes (221) arranged on the first touch region (TR1) may have a gradually larger area as advancing to the first direction. Each of the second diverging electrodes (221) arranged on the first touch region (TR1) may have a gradually wider width as advancing to the first direction.

To be more specific, the first diverging electrode may have the smallest area and the narrowest width (W4), the second diverging electrode may have the second smallest area and the second narrowest width (W5), and the third diverging electrode may have the largest area and the widest width (W6). The second diverging electrodes (222) arranged on the second touch region (TR2) may have a gradually smaller area and width as advancing to the first direction.

The third transparent electrode (300) is arranged across the second and third touch regions (TR2, TR3), and includes a third main electrode (310) and third diverging electrodes (320). The third main electrode (310) is extended to the first direction, and is arranged across the second touch and third touch regions (TR2, TR3). The third main electrode (310) is arranged side by side with the second main electrode (210), and arranged in a row with the first main electrode (110).

The third diverging electrodes (320) are extended to the second direction from the third main electrode (310). Each of the third diverging electrodes (320) is electrically connected by the third main electrode (310). The third diverging electrodes (320) may be divided to third diverging electrodes arranged on the second touch region (TR2) and third diverging electrodes (322) arranged on the third touch region (TR3).

Each of the third diverging electrodes (321) arranged on the second touch region (TR2) is arranged among the second diverging electrodes (222) arranged on the second touch region (TR2). To be more specific, the second diverging electrodes (222) arranged on the second region (TR2) and the third diverging electrodes (321) may be alternatively arranged. The third diverging electrodes (320) may have mutually different areas and width based on position.

For example, each of the third diverging electrodes (321) arranged on the second touch region (TR2) may have a gradually larger area and wider width as advancing to the first direction. Each of the third diverging electrodes (321) arranged on the third touch region (TR3) may have a gradually smaller area and narrower width as advancing to the first direction.

The fourth transparent electrode (400) is arranged only on the third touch region (TR3), and includes a fourth main electrode (410) and fourth diverging electrodes (420). The fourth main electrode (110) is extended to the first direction, and arranged in a row with the second main electrode (210).

The first diverging electrodes (120) are extended to the second direction from the first main electrode (110), and each of the first diverging electrodes (120) is electrically connected to the other first diverging electrode by the first main electrode (110).

Each of the fourth diverging electrodes (420) is arranged among the third diverging electrodes arrange on the third touch region (TR3). To be more specific, the fourth diverging electrodes (420) and the third diverging electrodes (320) arranged on the third touch region (TR3) are mutually alternatively arranged.

Each of the fourth diverging electrodes (420) has a different area and width based on each position. For example, each of the fourth diverging electrodes (420) has a gradually increasing area and width as advancing to the first direction.

The first, second, third and fourth diverging electrodes (120, 220, 320, 420) are arranged in a row to the first direction. Furthermore, as mentioned above, the first, second, third and fourth diverging electrodes (120) are sensing electrodes for sensing a signal inputted from the outside.

To explain in more detail, the first diverging electrodes (120) may be first sensing electrodes, and the third diverging electrodes arranged on the second touch region may be second sensing electrodes. Furthermore, the second diverging electrodes (220) may be third sensing electrodes, and the third diverging electrodes (322) arranged on the third touch region may be fourth sending electrodes. Lastly, the fourth diverging electrodes (420) may be fifth sensing electrodes.

Thus, as apparent from the foregoing, the first sensing electrodes are arranged on the first touch region and each of the first sensing electrodes is mutually electrically connected. Furthermore, the second sensing electrodes are arranged on the second touch region, and e each of the second sensing electrodes is mutually electrically connected.

The third sensing electrodes are arranged on the first and second touch regions. The third sensing electrodes are alternatively arranged with the first sensing electrodes and alternatively arranged with the second sensing electrodes, and electrically connected.

Each of the fourth sensing electrodes is electrically connected. Furthermore, the fourth sensing electrodes are arranged on the third touch region, and electrically connected to the second sensing electrodes. The fifth sensing electrodes are alternatively arranged with the fourth sensing electrodes. The first, second, third, fourth and fifth sensing electrodes are arranged in a row to the first direction. Each of the first, second, third, fourth and fifth sensing electrodes has an increasing or decreasing area as advancing to the first direction. Each of the first, second, third, fourth and fifth sensing electrodes has an increasing or decreasing width as advancing to the first direction.

Furthermore, a total sum of two adjacent diverging electrodes may be constant based on diverging electrodes arranged on a single touch region.

At this time, a sum total of width of mutually adjacent diverging electrodes (400) is defined as a pitch (P), where the sum of pitches (P) may be constant. An area formed by two adjacent diverging electrodes is defined as a sensing region (SR), and a plurality of sensing regions (SRs) is defined by a single touch region.

For example, the first touch region (TR1) may be defined as three sensing regions (SRs). At this time, a single sensing area (SR) may be defined by mutually adjacent first second diverging electrodes.

The pitch (P) may be substantially same as the width of each SR. At this time, the pitch (P) may be approximately in the range of 0.1mm∼ 10mm. To be more specific, the pitch (P) may be approximately in the range of 0.1mm∼ 3 mm.

Columns (CL1, CL2, CL3, CL4, CL5, CL6, CL7, CL8, and CL9) may be defined by the SRs. The SRs may be arranged to the second direction in a row, whereby the columns (CL1, CL2, CL3, CL4, CL5, CL6, CL7, CL8, and CL9) may be defined.

Each of the lead electrodes (50) is electrically connected to each of the transparent electrodes (30). The lead electrodes (50) may be directly connected to the main electrodes (31) or indirectly connected to the main electrodes (31) via connection electrodes (40). Furthermore, the lead electrodes (50) are respectively connected to the pad electrodes (60). That is, the lead electrodes (50) connect the pad electrodes (60) and the main electrodes (31) respectively.

The pad electrodes (60) are bonded to an FPCB (Flexible Printed Circuit Board) by an ACF (Anisotropic Conductive Film). The FPCB (Flexible Printed Circuit Board) connects the touch panel according to the exemplary embodiment of the present invention to a driving unit such as a system or a driver IC.

Examples of materials used for the lead electrodes (50), the connection electrodes (40) and the pad electrodes (60) include molybdenum, aluminum, copper, titanium, silver and an alloy thereof. The lead electrodes (50), the connection electrodes (40) and the pad electrodes (60) may be integrally formed.

Referring to FIGS. 4 and 5, the capacitance type touch panel according to the exemplary embodiment of the present invention may receive a touch signal in the following manner.

A conductive material such as a user finger contacts the upper substrate (10) or comes in close proximity to the upper substrate (10). At this time, a capacitance is formed between the finger and part of the transparent electrodes (30).

The driving unit receives the capacitance through the pad electrodes (60) and the lead electrodes (50). For example, the driving unit may apply a digital signal, a pulse signal or an AC (Alternating Current) voltage to measure a capacitance of the user finger.

At this time, the driving unit may measure a position of the finger based on the position of the transparent electrode sensed with the capacitance. For example, the driving unit detects a row of the transparent electrode sensed with the capacitance to measure a coordinate of y axis of the finger. Furthermore, the driving unit may detect the transparent electrodes to measure on which touched region the finger is arranged.

For example, as illustrated in FIG.4, in a case the first touch region (TR1) of the first row (RW1) is arranged with a first finger (B), a first signal (X1Y1) is inputted from the first transparent electrode (100), and a second signal (X2Y1) is inputted from the second transparent electrode (200). As a result, the driving unit can measure that the finger is arranged on the first touch region (TR1).

Furthermore, the position of the finger may be measured by a ratio of signal from capacitance inputted from each of the transparent electrodes. That is, an area of the diverging electrodes (32) is different based on position, such that size of capacitance between each of the transparent electrodes (30) and the finger varies based on the position of the finger. Thus, position of finger at each touch region can be measured by the ratio of signals inputted from the transparent electrodes arranged on each touch region.

For example, as shown in FIGS. 4 and 5, the position of the first finger (B) can be measured by a ratio between the first signal (X1Y1) and the second signal (X2Y1). Furthermore, an accurate position of the first finger (B) may be measured by fitting the first signal (X1Y1) and the second signal (X2Y1) to normal distribution characteristic. Furthermore, the accurate position of the first finger (B) may be measure by processing the first signal (X1Y1) and the second signal (X2Y1) in various methods.

Furthermore, the capacitance type touch panel according to the exemplary embodiment of the present invention can sense multiple touch signals respectively inputted to mutually different touch regions.

For example, referring to FIGS. 4 and 5, in a case a second finger (C) is inputted to the third touch region (TR3) of the first row (RW1), a third signal is inputted from the third transparent electrode (300), and a fourth signal is inputted from the fourth transparent electrode (400). Likewise, a ratio between the third signal and the fourth signal is calculated to accurately measure a position of the second finger (C). Thus, the driving unit can measure the positions of the first finger (B) and the second finger (C) at the same time.

Besides, referring to FIGS. 6, 7 and 8, a method for sensing respective positions, when respective touch signal are inputted to the mutually adjacent touch regions, will be described in the following fashion.

For example, in a case the first touch region (TR1) and the second touch region (TR2) are positioned with respective fingers, each finger is brought into contact with the first touch region (TR1) and the second touch region (TR2), with a time interval. That is, a third finger (D) is brought into contact with the first touch region (TR1), and then, a fourth finger (E) may be brought into contact with the second touch region (TR2), while the third finger (D) is brought into contact with the first touch region (TR1).

At this time, each of the transparent electrodes (30) is alternatively inputted at a very short cycle with a scan signal such as a pulse signal, a digital signal or an AC voltage, whereby, as shown in FIG.7, the driving unit measures a first capacitance (C1) between the second transparent electrode (2000 and the third finger (D), while only the third finger (D) is touched.

Successively, as illustrated in FIG. 8, the driving unit can measure a second capacitance (C2) between the fingers and the second transparent electrode (200), while the third and fourth fingers (D, E) are brought into contact. Thus, the driving unit can calculate a capacitance (C3) between the fourth finger (E) and the first transparent electrode (100) using a difference between the second capacitance (C2) and the first capacitance (C1).

Likewise, accurate positions of fingers can be calculated by measuring a capacitance between the third finger (D) and the first transparent electrode (100), and a capacitance between the fourth finger (E) and the third transparent electrode (300). Therefore, the capacitance type touch panel according to the exemplary embodiment of the present invention can sense multiple signals inputted from mutually adjacent touch regions.

The capacitance type touch panel according to the exemplary embodiment of the present invention can simultaneously sense an X axis and a Y axis of a finger, by transparent electrodes (30) formed on the same layer. Thus, the capacitance type touch panel according to the exemplary embodiment of the present invention can reduce an error caused by a difference in height of electrodes by comparing a touch panel structured with electrodes arranged in two or more layers.

Furthermore, the capacitance type touch panel according to the exemplary embodiment of the present invention can adjust accuracy by adjusting the pitch (P), such that the capacitance type touch panel according to the exemplary embodiment of the present invention can also detect a touch by a small object to accomplish a high accuracy. Even if width of each row is increased, an X axis coordinate can be accurately sensed by reducing the size of the pitch (P). Therefore, the capacitance type touch panel according to the exemplary embodiment of the present invention can increase the width of the row to reduce the number of lead electrodes (50), whereby the capacitance type touch panel according to the exemplary embodiment of the present invention can further embody a simple structure.

### [Mode for Invention]

FIG.9 is a plan view illustrating an electrode structure of a capacitance type touch panel according to an exemplary embodiment of the present invention. In the present exemplary embodiment of the present invention, a plurality of ground electrodes will be additionally described in addition to the aforementioned exemplary embodiments of the present invention.

Referring to FIG.9, the capacitance type touch panel according to the exemplary embodiment of the present invention includes a plurality of ground electrodes (33), where the plurality of ground electrodes (33) is transparent, and arranged among the transparent electrodes (30). To be more specific, the plurality of ground electrodes (33) is arranged nearby at least one of the transparent electrodes (30).

The ground electrodes (33) are made of transparent material as that of the transparent electrodes, and are formed on the same layer as that of the transparent electrodes. The ground electrodes (33) are extended to the first direction. That is, the ground electrodes (33) are arranged side by side with the main electrode (31) of the transparent electrodes (33).

The ground electrodes (33) are applied with a ground voltage (GND), whereby a scan signal flowing between the fingers and the transparent electrodes (30) can easily escape through a parasite capacitance formed between the fingers and the ground electrodes. Thus, a capacitance between the transparent electrodes (30) and the fingers can be easily measured by the ground electrodes (33).

The previous description of the present invention is provided to enable any person skilled in the art to make or use the invention. Various modifications to the invention will be readily apparent to those skilled in the art, and the generic principles defined herein may be applied to other variations without departing from the spirit or scope of the invention. Thus, the invention is not intended to limit the examples described herein, but is to be accorded the widest scope consistent with the principles and novel features disclosed herein.

### [Industrial Applicability]

The present invention has an industrial applicability in that electrodes for sensing signals from the outside can be arranged on a single layer, and an error caused by difference in height of electrodes for sensing the signals from the outside can be reduced.

## Claims

1. An input device, the device **characterized by**: a substrate including a first region and a second region adjacent to the first region; a plurality of first sensing electrodes arranged on the first region, each electrode electrically connected to the other electrode; a plurality of second sensing electrodes arranged on the second region, each electrode electrically connected to the other electrode; a plurality of third sensing electrodes alternatively arranged with the first sensing electrodes and alternatively arranged with the second sensing electrodes, and each electrode electrically connected to the other electrode, wherein the first, second and third sensing electrodes are arranged in a row.

2. The input device of claim 1, **characterized in that** the substrate includes a third region adjacent to the second region, a plurality of fourth sensing electrodes arranged on the third region and electrically connected to the second sensing electrodes; a plurality of fifth sensing electrodes arrange on the third region, and alternatively arranged with the fourth sensing electrodes, each electrode electrically connected to the other electrode, wherein the first, second, third, fourth and fifth sensing electrodes are arranged in a row.

3. The input device of claim 1, **characterized in that** the first, second and third sensing electrodes are arranged in a row to a first direction, each of the first sensing electrodes has a different area based on position and the first sensing electrode is gradually increased or decreased in area as advancing to the first direction.

4. The input device of claim 3, **characterized in that** each of the third sensing electrodes has a different area based on position, and is gradually increased or decreased in area as advancing to the first direction.

5. The input device of claim 1, further **characterized by** a first main electrode extended to a first direction and connected to the first sensing electrode; a second main electrode extended to the first direction and connected to the second sensing electrodes; and a third main electrode extended to the first direction and connected to the third sensing electrodes.

6. The input device of claim 5, **characterized in that** the first and second main electrodes are arranged in a row to the first direction.

7. The input device of claim 1, **characterized in that** the first, second and third sensing electrodes are arranged on the same layer.

8. An input device, the device **characterized by**: a substrate including a first region and a second region adjacent to the first region; a first transparent electrode arranged on the first region and including a first main electrode extended to a first direction and a plurality of first diverging electrodes extended from the first main electrode; a second transparent electrode arranged across the first and second regions and including a second main electrode extended to the first direction and a plurality of second diverging electrodes extended from the second main electrode; and a third transparent electrode arranged on the second region and including a third main electrode extended to the first direction and a plurality of third diverging electrodes extended from the third main electrode.

9. The input device of claim 8, **characterized in that** each of the first diverging electrodes has a different area based on position, and is gradually increased or decreased in area on the substrate as advancing to the first direction.

10. The input device of claim 9, **characterized in that** each of the third diverging electrodes has a different area based on position, and is gradually increased or decreased in area on the substrate as advancing to the first direction.

11. The input device of claim 8, **characterized in that** the first, second and third diverging electrodes are arranged in a row, a part of the first and second diverging electrodes is alternatively arranged, and the other part of the third and second diverging electrodes is alternatively arranged.

12. The input device of claim 8, **characterized in that** the input device further includes a ground electrode arranged adjacent to at least one of the first, second and third transparent electrodes.

13. The input device of claim 8, **characterized in that** the substrate includes a third region adjacent to the second region and a fourth transparent electrode arranged on the third region.
